# EUROPÄISCHE PATENTSCHRIFT

(11) **EP 1 926 929 B1**
(45) Veröffentlichungstag und Bekanntmachung des Hinweises auf die Patenterteilung: **25.02.2009**
(21) Anmeldenummer: 05783533.2
(22) Anmeldetag: 20.09.2005
(51) Int. Cl.: F16L 37/38

(54) **VENTILVORRICHTUNG**
VALVE DEVICE
ENSEMBLE SOUPAPE

(43) Veröffentlichungstag der Anmeldung: 04.06.2008
(73) Patentinhaber: VERITAS AG, 63571 Gelnhausen (DE)
(72) Erfinder: RÖSCH, Thomas, 63589 Linsengericht (DE); BECK, Bernhard, 63599 Biebergemünd (DE); HEMPEL, Werner, 61130 Nidderau (DE)
(74) Vertreter: Grünecker, Kinkeldey, Stockmair & Schwanhäusser Anwaltssozietät
(86) Internationale Anmeldenummer: PCT/EP2005/010142
(87) Internationale Veröffentlichungsnummer: WO 2007/033694

(56) Entgegenhaltungen:
- EP-A- 0 702 187
- EP-A- 1 046 842
- WO-A-99/47839
- AU-B2- 777 622
- DE-A1- 19 711 678
- GB-A- 939 511
- US-A- 2 601 339
- US-A- 3 788 598
- US-A1- 2002 125 452
- US-A1- 2003 127 618

## Beschreibung

Die Erfindung bezieht sich auf eine Ventilvorrichtung, vorzugsweise für eine Leitungs- oder Verbindungseinrichtung, mit einem Ventilkörper, der von einer geöffneten Stellung in eine geschlossene Stellung überführbar ist, gemäß dem Oberbegriff des Anspruchs 1.

Eine Ventilvorrichtung dieser Art ist aus dem Druckschrift US 3788598 bekannt.

Derartige Ventilvorrichtungen sind aus dem Stand der Technik bereits bekannt und werden in einer Vielzahl von Konstruktionsvarianten unter anderem in Haustechnik, Maschinenbau und im Automobilbau verwendet. Dabei weisen sie einen hinsichtlich ihrer Form unterschiedlich ausgestalteten Ventilkörper auf, der mittels einer Betätigungsvorrichtung von einer geöffneten in eine geschlossene Stellung überführt und in der geschlossenen Stellung zur Unterbrechung des Durchflusses mit einem Ventilsitz in Anlage gebracht werden kann.

Dabei stellen derartige Ventilvorrichtungen - insbesondere bei besonders kleiner und kompakter Bauweise - zumeist einen erheblichen Durchflusswiderstand dar, weil es innerhalb der Ventilvorrichtung zur Einengung des Durchflussquerschnittes und durch abrupte Umlenkung der Strömung zu Verwirbelungen und zu Turbulenzenbildung kommt, wodurch der Durchflusswiderstand weiter erhöht wird. Somit stellen derartige Ventilvorrichtungen nicht-optimale Kompromisse hinsichtlich ihrer Baugröße und Strömungsbeeinträchtigung dar. Dieser Nachteil tritt besonders bei kleinen, innerhalb einer Leitungseinrichtung oder einer Schnellkupplung integrierbaren Durchgangsventilen auf, die während eines Großteils ihrer Einsatzzeit den Durchfluss nicht behindern und nur unter bestimmten Bedingungen (Trennung der Verbindung, Unfall, Störung oder Ähnliches) den Durchfluss unterbrechen sollen.

Der Erfindung liegt deshalb die Aufgabe zugrunde, eine Ventilvorrichtung gemäß dem Oberbegriff des Anspruchs 1 anzugeben, die klein und kompakt baut, und gleichzeitig möglichst geringe Strömungswiderstände und Beeinträchtigung des Durchflussweges ermöglicht.

Diese Aufgabe wird erfindungsgemäß gelöst durch eine Ventilvorrichtung mit den Merkmalen des Anspruchs 1.

Ein Vorteil vorliegender Erfindung besteht darin, dass eine derartige Ventilvorrichtung vorteilhaft als Durchgangsventil in Leitungseinrichtungen und innerhalb von Leitungsverbindern, vorzugsweise Quick Connectoren, einsetzbar ist. Besonders eignen sich derartige Ventilvorrichtungen auch als selbstschließende Sicherheitsventile oder Rückschlagventile. Unter anderem sind derartige Ventilvorrichtungen mit Vorteil in der Automobilindustrie verwendbar, um den Kraftstoffdurchfluss freizugeben bzw. zu unterbrechen, wenn Motoren, die am Produktionsort zum Probelauf an Kraftstoffleitungen angeschlossen werden, nach dem Probelauf wieder von der Kraftstoffzufuhr abgetrennt werden, um sie an die Montagestraße zum bestimmungsgemäßen Einbau zu transportieren und dort wiederum an eine Kraftstoffleitung anzuschließen, oder um den Motor z.B. im Zuge von Wartungs-, Austausch- oder Reparaturarbeiten aus dem Fahrzeug herausbauen bzw. wieder zurückbauen zu können, ohne dass es zur Leckage von Kraftstoff aus der Kraftstoffleitung kommen kann. Ein weiterer Vorzug der erfindungsgemäßen Ventilvorrichtung liegt in dem geraden Durchgangsweg durch die Ventilvorrichtung, der nicht durch einen Ventilkörper behindert wird und somit eine bessere Reinigungs- und Sondierungsmöglichkeit bietet. Auch wenn vorstehend Vorteile und Verwendung der Erfindung in besonderem Maße in der Automobiltechnik erläutert wurden, bleibt die vorteilhafte Verwendung der Erfindung nicht auf diesen Bereich beschränkt, und kann ihre günstigen Eigenschaften ebenfalls in anderen Bereichen des Maschinenbaus, der Medizintechnik, der Bau- und Haustechnik und der Industrie entfalten.

In einer weiteren bevorzugten Ausführungsform kann im geschlossenen Zustand ein dichtender Kontakt zwischen den Dichtkanten oder Dichtflächen einander benachbarter Sektoreinrichtung herstellbar sein und die in geschlossenem Zustand aneinander anliegenden Dichtkanten oder Dichtflächen einander benachbarter Sektoreinrichtungen können sich beim Überführen des Ventilkörpers in die geöffnete Stellung zumindest abschnittsweise in Umfangsrichtung voneinander entfernen. Bei einer solchen technisch einfach zu realisierenden Struktur des Ventilkörpers kann sich der öffnungsseitige Abschnitt des Ventilkörpers maximal öffnen.

In einer weiteren bevorzugten Ausführungsform kann der Ventilkörper mit mehreren Sektoreinrichtungen im geschlossenen Zustand dichtend mit einer Außenkontur des Ventilkörpers mit einem Ventilsitz in Anlage bringbar sein, wodurch sich gleichzeitig mit der dichten Schließung der Dichtkanten oder Dichtflächen der Sektoreinrichtungen ein dichter Sitz des geschlossenen Ventilkörpers im Ventilsitz erzielen lässt.

In einer weiteren bevorzugten Ausführungsform kann der Ventilkörper hohl sein, wobei der Ventilkörper im geschlossenen Zustand eine in Richtung eines Öffnungsendes geschlossene Hohlform ausgebildet, die eine Öffnung in Richtung eines Nicht-Öffnungsendes des Ventilkörpers aufweist, und dessen Sektoreinrichtungen Dichtkanten ausbilden, durch die im geschlossenen Zustand ein dichtender Kontakt zwischen den Sektoreinrichtungen herstellbar ist. Durch eine solche hohle Ausführung des Ventilkörpers ist es möglich, einen größeren Durchströmungsquerschnitt zu erhalten und damit den Durchströmungswiderstand zu senken.

In einer weiteren bevorzugten Ausführungsform können die Sektoreinrichtungen durch eine Betätigungsvorrichtung von der geöffneten Stellung in die geschlossene Stellung überführbar sein, wodurch eine gezielte Betätigung der Sektoreinrichtungen, unabhängig z.B. von Strömungs- und Druckverhältnissen, ermöglicht wird.

In einer weiteren bevorzugten Ausführungsform kann die Betätigungsvorrichtung zumindest abschnittsweise mechanisch mit den Sektoreinrichtungen verbunden sein, wodurch die Sektoreinrichtungen direkt und zumindest ohne unmittelbare Interaktion mit einem anderen Bauteil betätigbar sind, wodurch die Gefahr von Verschleiß oder Beschädigung vermindert werden kann.

In einer weiteren bevorzugten Ausführungsform kann die Betätigungsvorrichtung mit den Sektoreinrichtungen mechanisch unverbunden und relativ zu den Sektoreinrichtungen in Axialrichtung bewegbar sein. Eine solche Betätigungsvorrichtung kann, z.B. entweder aus Richtung des Öffnungsendes oder des Nicht-Öffnungsendes des Ventilkörpers gegen den Ventilkörper bewegt werden und diesen ähnlich Spannzangen einer Konus-Klemmvorrichtung oder eines Spannfutters zur Schließung veranlassen.

Gemäß der Erfindung sind die Sektoreinrichtungen relativ zu einem Ventilsitz in Axialrichtung bewegbar, wobei die Sektoreinrichtungen durch Gegenschieben gegen den Ventilsitz radial aufeinander zu bewegbar und schließbar sind und durch Entfernen vom Ventilsitz öffenbar sind. Dadurch ist es in einfacher und technisch eleganter Weise möglich, die Sektorelemente durch Gegenschieben derselben gegen den Ventilsitz zu schließen und den Ventilkörper mit dem Ventilsitz dichtend in Anlage zu bringen.

In einer weiteren bevorzugten Ausführungsform können die Sektoreinrichtungen des Ventilkörpers durch Ziehen des Ventilkörpers in den Ventilsitz schließbar sein, wodurch sich die Doppelschlussbewegung, welche die Dichtkanten der Sektoreinrichtungen in dichtenden Kontakt, und den Ventilkörper mit dem Ventilsitz dichtend in Anlage bringt, besonders einfach und effizient mit der Bewegung der Kraftumlenkungseinrichtung koppeln lässt.

In einer weiteren bevorzugten Ausführungsform kann der Ventilkörper mit der Zug- und/oder Druckbetätigungseinrichtung verbindbar sein, durch die der Ventilkörper relativ zum Ventilsitz bewegbar ist. Bei dieser Ausführungsform ist es möglich, den Ventilkörper und die Zug- und/oder Druckbetätigungseinrichtung, die zusammen einstückig oder mehrteilig ausgeführt sein können, direkt zu koppeln und so eine einfache und zuverlässige Konstruktion bereitzustellen.

In einer weiteren bevorzugten Ausführungsform kann der Ventilkörper an seiner Außenseite eine Mehrzahl ebener Flächenelemente aufweisen, wodurch sich eine einfache mechanische Anlenkung der Sektoreinrichtungen, z.B. über Scharnierelemente, herstellen lässt.

In einer weiteren bevorzugten Ausführungsform kann der Ventilkörper an seiner Außenseite kegelmantelsektorförmige oder kegelstumpfmantelsektorförmige Teiloberflächen aufweisen. Durch die Ausbildung eines kegelförmigen Konusabschnitts kann der Ventilkörper einen besonders einfachen und zuverlässigen Dichtkontakt mit dem Ventilsitz herstellen.

In einer weiteren bevorzugten Ausführungsform kann der Ventilkörper an seiner Außenseite ellipsoide, paraboloide oder hyperboloide Teiloberflächen aufweisen. Eine solche Formgebung bietet sich z.B. an, um mit einer kurzen Hubbewegung der Zug-Druck-Betätigungseinrichtung Ventilöffnung bzw. Ventilschluss durchzuführen, die Schließkräfte der Sektoreinrichtungen zu erhöhen, oder die Wiederöffnung des Ventils - je nach Ausbildung des Kontaktwinkels zwischen Ventilkörper und Ventilsitz - zu erleichtern, zu erschweren oder zu verhindern. Außerdem können durch eine solche Gestaltung des Ventilkörpers Öffnungswinkel und Durchflussquerschnitt durch den geöffneten Ventilkörper optimiert werden.

In einer weiteren bevorzugten Ausführungsform kann der geschlossene Ventilkörper zwei basengleiche und an den Basen miteinander verbundene Kegelstrukturen aufweisen, deren eine, in Richtung des Öffnungsendes angeordnete Kegelstruktur in ihrer Außenform einem Kegelmantel und deren andere, in Richtung des Nicht-Öffnungsendes angeordnete Kegelstruktur in ihrer Außenform einem Kegelstumpfmantel entspricht und der geschlossene Ventilkörper in transversaler Schnittebene kreisförmig ist. Dies stellt die geometrisch einfachste Formgebung für den Ventilkörper dar, die gleichzeitig einen guten Sitz des geschlossenen Ventilkörpers im Ventilsitz ermöglicht.

In einer weiteren bevorzugten Ausführungsform kann der geschlossene Ventilkörper zwei basengleiche und an den Basen miteinander verbundene Pyramidenstrukturen aufweisen, deren eine, in Richtung des Öffnungsendes angeordnete Pyramidenstruktur in ihrer Außenform einem Pyramidenmantel und deren andere, in Richtung des Nicht-Öffnungsendes angeordnete Pyramidenstruktur in ihrer Außenform einem Pyramidenstumpfmantel entspricht und der geschlossene Ventilkörper in transversaler Schnittebene ein reguläres Polygon bildet. Diese ebenfalls sehr einfache Formgebung erscheint vorteilhaft, wenn gerade Scharnierachsen zur Anlenkung der Sektoreinrichtungen zur Anwendung kommen sollen.

In einer weiteren bevorzugten Ausführungsform kann der geschlossene Ventilkörper zumindest an dem geschlossenen Spitzende des Pyramidenscheitels der in Richtung des Öffnungsendes gelegenen Pyramide, in Radialrichtung öffenbare Sektoreinrichtungen aufweisen, die Dichtkanten ausbilden, welche zumindest die Außenkanten der in Richtung des Öffnungsendes angeordneten Pyramide umfassen. Die zumindest abschnittsweise Führung der Dichtkanten entlang der Außenkanten der Pyramiden stellt eine bei pyramidaler Formgebung des Ventilkörpers besonders zweckmäßige Struktur dar, bei der die Sektorelemente mittels gerade verlaufender Scharnierelemente anlenkbar sind und so eine saubere Führung der Sektoreinrichtungen und ein guter Dichtschluss der Dichtkanten erzielbar ist.

In einer weiteren bevorzugten Ausführungsform können die Pyramidenstrukturen aus geraden, dreidimensionalen Simplices oder Tetraedern aufgebaut sind und in transversaler Schnittebene ein gleichseitiges Dreieck bilden, was eine besonders einfache und effiziente Formgebung des Dichtkörpers und sehr gute Selbstzentrierungseigenschaften ermöglicht. Außerdem wird ein solcher Ventilkörper gleichzeitig im (polygonalen) Ventilsitz in Rotationsrichtung (syngonal) justiert bzw. ausgerichtet.

In einer weiteren bevorzugten Ausführungsform kann der rotationssymmetrische oder polyedrische, achsensymmetrische Ventilkörper eine transversale Äquatorialebene aufweisen, in der dessen Transversalschnitt ein Flächenmaximum ausbildet, von dem aus sich der Ventilkörper in Schließrichtung im Wesentlichen konisch verjüngt. Durch eine solche Formgebung des Ventilkörpers kann der Ventilkörper selbst gleichzeitig und ohne weitere Einrichtungen einen Dichtkonus ausbilden und die zur Schließbewegung der Sektoreinrichtungen notwendige radiale Schließkraft beim Ziehen des Ventilkörpers in den Ventilsitz erzeugen.

In einer weiteren bevorzugten Ausführungsform kann der Ventilkörper in transversaler Äquatorialebene, in der dessen Transversalschnitt ein Flächenmaximum aufweist, einen Kreis umschreiben von der aus sich der Ventilkörper in Schließrichtung im Wesentlichen konisch verjüngt und in transversaler Schnittebene in ein Polygon übergeht. Eine solche Formgebung ermöglicht gleichzeitig die Vorteile eines radialen Ventilsitzes, wie auch lineare Scharnierelemente.

In einer weiteren bevorzugten Ausführungsform kann der Ventilkörper eine ungerade Zahl von Sektoreinrichtungen, vorzugsweise drei Sektoreinrichtungen, aufweisen, die von der Mittelachse aus gleiche Sektorwinkel, vorzugsweise 120° Winkel, einschließen, wodurch sich eine bessere Selbstzentrierung der Sektoreinrichtungen im geschlossenen Zustand erzielen lässt.

In einer weiteren bevorzugten Ausführungsform kann der Ventilkörper mindestens ein Grundelement umfassen, an dem die Sektoreinrichtungen angelenkt sind. Hierdurch ist eine einfache und zuverlässige Konstruktion der Anlenkung der Sektoreinrichtungen möglich, die individuell mit dem Grundelement verbindbar sind und so zuverlässig gehalten und geführt werden.

In einer weiteren bevorzugten Ausführungsform können die Sektoreinrichtungen mittels Scharnieren, vorzugsweise Folienscharnieren, oder Biegeabschnitten mit dem Grundelement des Ventilkörpers verbunden sein und der Ventilkörper vorzugsweise einstückig ausgebildet werden. Eine solche Bauform ist konstruktiv und herstellungstechnisch besonders günstig und ermöglicht im Falle von Folienscharnieren oder Biegeabschnitten unter Umständen die Herstellung des gesamten Ventilkörpers, z.B. im Spritzgussverfahren, in nur einem Arbeitsschritt.

In einer weiteren bevorzugten Ausführungsform kann der Ventilkörper abschnittsweise unterschiedliche Werkstoffe aufweisen und vorzugsweise in einem Mehrkomponenten-Formverfahren herstellbar sein. Dies kann insbesondere durch Mehrkomponenten-Spritzgiess-Verfahren, Mehrkomponenten-Spritzpräge-Verfahren, oder entsprechende Sinterverfahren, Coextrusions-, Beschichtungs- oder Laminierverfahren geschehen. Hierdurch kann der Ventilkörper an u.a. die unterschiedlichen mechanischen Anforderungen der verschiedenen Funktionsabschnitte optimal angepasst werden, wodurch ein solcher Ventilkörper insbesondere für erhöhte Anforderungen besonders tauglich ist.

So ist es beispielsweise auch denkbar, den Ventilkörper mit gleitfähigen oder abriebfesten Beschichtungen oder biegebeständigen Laminierungen zu versehen oder bewegliche oder dichtende Abschnitte mit zur Erfüllung der spezifischen Anforderungen besonders geeigneten Materialien auszustatten.

In einer weiteren bevorzugten Ausführungsform kann der Ventilkörper im Anlenkungs- und Biegebereich der Sektoreinrichtungen im Vergleich zu den daran angrenzenden Bereichen des Ventilkörpers einen Werkstoff höherer Elastizität und/oder geringeren E-Moduls aufweisen, wodurch dieser Bereich besonders an die Biegebeanspruchung bei Ventilbetätigung angepasst werden kann.

In einer weiteren bevorzugten Ausführungsform kann der Ventilkörper im Bereich der Dichtkanten der Sektoreinrichtungen einen Dichtungswerkstoff aufweist. Auf diese Weise können beispielsweise besonders zuverlässig dichtende, anpassungsfähige, flexible, mediophobe gegenüber den den Ventilbereich durchströmenden Medien und/oder verschleißbeständige Dichtbereiche zwischen den Sektoreinrichtungen geschaffen werden.

In einer weiteren bevorzugten Ausführungsform kann der Ventilkörper im Ventilsitzbereich der Sektoreinrichtungen einen Dichtungswerkstoff aufweist. Auf diese Weise kann beispielsweise ein besonders zuverlässig dichtende, anpassungsfähiger, flexibler, mediophober gegenüber den den Ventilbereich durchströmenden Medien und/oder verschleißbeständiger Dichtbereich zwischen dem Ventilkörper und dem Ventilsitz geschaffen werden.

In einer weiteren bevorzugten Ausführungsform können die Sektoreinrichtungen in geöffneter Stellung vorgespannt sein, wodurch sich ein zuverlässiges und maximales Öffnen der Sektoreinrichtungen und damit die Freigabe des vollen Durchströmungsquerschnittes, unabhängig von den Druckverhältnissen beiderseits der Ventileinrichtung sicherstellen läßt.

In einer weiteren bevorzugten Ausführungsform können die Biegeabschnitte vorzugsweise eine dreidimensionale Form aufweisen, wobei die Werkstoffelastizität zur Vorspannung der Sektoreinrichtungen ausnutzbar ist. Durch eine solche Ausführung ist eine Bereitstellung der Vorspannung ohne zusätzlichen fertigungstechnischen Aufwand allein aufgrund von Materialeigenschaften und Formgebung möglich.

In einer weiteren bevorzugten Ausführungsform kann die Zug- und/oder Druckbetätigungseinrichtung federelastische Eigenschaften aufweisen und dafür vorgesehen sein, den Ventilkörper in Schließrichtung desselben mit einer Rückstellkraft zu beaufschlagen und den Ventilkörper bei Entfernen des Endabschnitts der Leitungseinrichtung oder der zweiten Verbindungseinrichtung aus dem Verbindungsbereich des Ventilgehäuses von der geöffneten Stellung in die geschlossene Stellung zu überführen. Dies könnte beispielsweise durch eine Zug- und/oder Druckbetätigungseinrichtung erzielt werden, die aus einem metallischen oder polymeren Werkstoff hoher Elastizität besteht, wodurch sie als Federelement wirkt und beispielsweise durch geeignete Kontaktbereiche innerhalb des Durchströmungskanals, gegen die sich die Zug- und/oder Druckbetätigungseinrichtung abstützt, über das Rückkehrbestreben des Federelement in seine Ausgangsform zu einer Rückstellbewegung des Ventilkörpers führen. So wäre es beispielsweise u.a. denkbar, die Zug- und/oder Druckbetätigungseinrichtung als Blattfeder oder Schraubenfeder auszuführen oder eine solche Feder in die Zug- und/oder Druckbetätigungseinrichtung zu integrieren. Hierdurch kann konstruktiv sichergestellt werden, dass - unabhängig von den Druck- und Durchflussverhältnissen in den mit der Ventilvorrichtung verbundenen Leitungseinrichtungen - ein sofortiges aktives Schließen der Ventileinrichtung bei Entfernen des Endabschnitts der Leitungseinrichtung eintritt. Durch die hier vorgeschlagene federelastische Ausführung der Zug- und/oder Druckbetätigungseinrichtung kann vorgenannte Funktion ohne den Einsatz weiterer Bauteile gewährleistet werden.

In einer weiteren bevorzugten Ausführungsform kann die Ventilvorrichtung eine Rückstelleinrichtung umfassen, welche den Ventilkörper in Schließrichtung desselben mit einer Rückstellkraft beaufschlagt und dafür vorgesehen ist, den Ventilkörper bei Entfernen des Endabschnitts der Leitung oder der zweiten Verbindungseinrichtung aus dem Verbindungsbereich eines Kupplungsgehäuses von der geöffneten Stellung in die geschlossene Stellung zu überführen. Dabei ist hier eine eigenständige Einrichtung oder ein Bauteilabschnitt, der nicht - oder nicht überwiegend - gleichzeitig für die Druckübertragung vorgesehen ist, für die Rückstellfunktion zuständig und optimiert. Hierdurch kann konstruktiv besonders zuverlässig sichergestellt werden, dass - unabhängig von den Druck- und Durchflussverhältnissen in den mit der Ventilvorrichtung verbundenen Leitungseinrichtungen - ein sofortiges selbsttätiges Schließen der Ventileinrichtung bei Entfernen des Endabschnitts der Leitungseinrichtung oder der zweiten Verbindungseinrichtung eintritt und eine Leckage unterbleibt.

In einer weiteren bevorzugten Ausführungsform kann die Rückstelleinrichtung eine Schraubenfeder sein, die einen großen Rückstellweg und einen besonders raumeffizienten Einbau bei gleichzeitig guter Platzierbarkeit ermöglicht.

In einer weiteren bevorzugten Ausführungsform kann die Rückstelleinrichtung eine Zugfeder sein, die sich in vielfältigen Varianten der erfindungsgemäßen Kupplung als besonders universell einsetzbare Rückstelleinrichtung unabhängig von der Konstruktion der Zug- und/oder Druckbetätigungseinrichtung verwenden lässt.

In einer weiteren bevorzugten Ausführungsform kann die Schraubenfeder innerhalb des Durchströmungskanals des Gehäuses, zumindest Abschnitte der Zug- und/oder Druckbetätigungseinrichtung umschließend, zwischen der Innenwand des Gehäuses und der Zug- und/oder Druckbetätigungseinrichtung angeordnet sein, wodurch sich eine besonders kompakte Bauweise bei gleichzeitiger Mitnutzung der Druckfeder als Führungseinrichtung für die Zug- und/oder Druckbetätigungseinrichtung ergibt.

In einer weiteren bevorzugten Ausführungsform kann die Schraubenfeder eine Druckfeder sein und zwischen einem mit der Zug- und/oder Druckbetätigungseinrichtung mechanisch verbundenen Anschlagelement und einer davon axial beabstandeten und im Bezug auf dieses Anschlagelement in Durchströmungsrichtung näher am Ventilkörper gelegenen gehäuseseitigen Auflage einspannbar sein, wobei der Ventilkörper über die Zug- und/oder Druckbetätigungseinrichtung durch Zug in Schließstellung überführbar und die Druckfeder bei Überführen des Ventils in die geschlossene Stellung auf Druck belastbar ist. Eine solche Anordnung ermöglicht eine besonders zweckmäßige und konstruktiv elegante Lösung zur Nutzung der Zug- und/oder Druckbetätigungseinrichtung zur Betätigung des Ventilkörpers in beide Richtungen, d.h. in Öffnungsrichtung und Schließrichtung, wobei die Zug- und/oder Druckbetätigungseinrichtung als Druck-Zug-Element einsetzbar ist.

In einer weiteren bevorzugten Ausführungsform kann die gehäuseseitige Auflage der Druckfeder dem Ventilsitz benachbart angeordnet sein, was vielfach eine kompaktere Konstruktion bei gleichzeitiger Stabilisierung der Zug- und/oder Druckbetätigungseinrichtung ermöglicht:

In einer weiteren bevorzugten Ausführungsform kann der Ventilkörper in Radialrichtung von einer Schutzhülse umgeben sein. Durch eine solche Schutzhülse, die einstückig mit dem Gehäuse ausgebildet, in der ventilseitigen sich anschließenden Leitungseinrichtung integriert oder separat und z.B. für Wartungsarbeiten vom Gehäuse trennbar mit demselben verbunden sein kann, ist es möglich, den Ventilkörper vor Beschädigungen bei Montage oder im Einsatz zuverlässig zu schützen.

In einer weiteren bevorzugten Ausführungsform kann die Schutzhülse den Ventilkörper zumindest in dessen geschlossenem Zustand in Radialrichtung im Wesentlichen vollständig umgeben, wodurch eine zumeist ausreichende Dimensionierung für einen wirksamen Schutz des Ventilkörpers gegeben ist.

In einer weiteren bevorzugten Ausführungsform kann die Schutzhülse mit dem Ventilgehäuse unverlierbar verbindbar und vorzugsweise mit diesem einstückig ausgebildet sein. Hierbei kann ein Verlieren und ggf. auch unbeabsichtigtes Lösen der Schutzhülse bei Montage und Einsatz zuverlässig vermieden werden. Dies kann durch geeignete mechanische Vorkehrungen erfolgen, oder -, falls eine Abnahme der Schutzhülse z.B. bei Montage- und Wartungsarbeiten nicht erforderlich ist, kostengünstiger und einfacher - durch eine stoffschlüssige Verbindung zwischen Schutzhülse und Ventilgehäuse, was am kostengünstigsten durch eine einstückige Ausführung beider vorgenannter Einrichtungen zu erzielen ist.

Die vorstehend ausgeführten Ausgestaltungen der Erfindung stellen lediglich eine Auswahl zweckmäßiger Gestaltungsmöglichkeiten des Erfindungsgegenstandes dar, die in den einzelnen Unteransprüchen niedergelegt sind. Diese speziellen Gestaltungsmöglichkeiten können einzeln oder, soweit technisch möglich und sinnvoll, auch in Kombination mehrerer der vorerwähnten Gestaltungsvarianten mit einer Ventilvorrichtung gemäß dem Anspruch 1 Anwendung finden, wie aus den entsprechenden Rückbezügen der abhängigen Ansprüche ersichtlich.

Nachfolgend wird die Erfindung beispielhaft anhand eines bevorzugten Ausführungsbeispiels in Verbindung mit den dazugehörigen Figuren näher erläutert. Es zeigen:
- Fig. 1: die schematische Darstellung eines Medianschnitts in Axialebene durch einen Quick Connector mit abgekoppeltem Leitungsstutzen und geschlossenem Ventil;
- Fig. 2: die schematische Darstellung eines Medianschnitts in Axialebene durch einen Quick Connector mit eingestecktem Leitungsstutzen und geöffnetem Ventil;
- Fig. 3: die schematische Detaildarstellung eines Medianschnitts in Axialebene durch den Ventilbereich eines Quick Connectors mit eingestecktem Leitungsstutzen und geöffnetem Ventil.

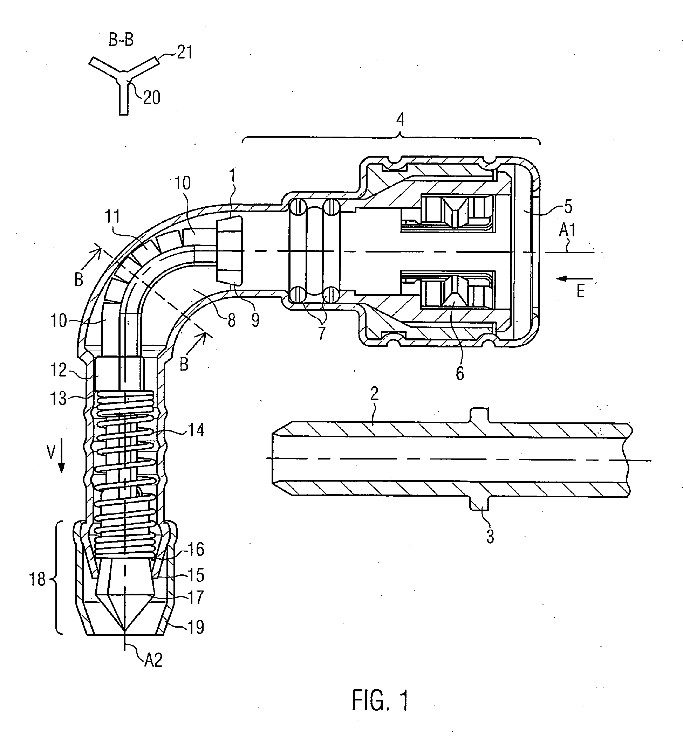

Fig. 1 zeigt einen Quick Connector oder eine Schnellkupplung mit einem Kupplungsgehäuse 1 zum Verbinden eines Leitungsendabschnitts oder eines Leitungsstutzens 2 mit einem in Umfangsrichtung umlaufenden Befestigungskragen 3, bei dem das Leitungsendstück 2 abgekoppelt ist und sich das Ventil in geschlossener Stellung befindet.

Das Kupplungsgehäuse 1 weist einen geraden Achsabschnitt, die Einsteckachse A1, auf, der am verbindungsendseitigen Ende den Verbindungsabschnitt 4 umfasst, daran in Einsteckrichtung E anschließend, einen gekrümmten Abschnitt, der eine 90° Biegung beschreibt und ventilseitig wiederum in einen geraden Achsabschnitt, die Ventilachse A2, übergeht und im Ventilabschnitt 18 endet. Das Kupplungsgehäuse 1 ist hohl und von einem Durchströmungskanal 8 durchzogen, der im Ventilbereich (Ventilabschnitt 18) durch den Ventilkörper 17 in Schließstellung geschlossen wird.

Der Verbindungsabschnitt 4 des Kupplungsgehäuses 1 umfasst eine Aufnahmeöffnung 5 zur axialen Einführung (in Richtung E) des Leitungsstutzens 2 einer Leitung sowie mit einer Verbindungseinrichtung 6, durch die der Leitungsstutzen 2 arretiert werden kann, sowie in Einsteckrichtung E dahinter angeordnete Dichtungsringe 7, mittels derer der mechanisch arretierte Leitungsstutzen 2 hydraulisch oder pneumatisch mit dem Durchströmungskanal 8 verbunden und flüssigkeits- und/oder gasdicht gegenüber der Umgebung abgeschlossen werden kann.

Am ventilendseitigen und der Aufnahmeöffnung 5 in Axialrichtung entgegengesetzten Ende des Verbindungsabschnitts 4 ist ein in Axialrichtung durchströmbarer Anschlagring 9 angeordnet, der mit einer Druckübertragungseinrichtung 10 nach Art eines Druckstössel verbunden ist. Die Druckübertragungseinrichtung 10 nach Art eines Stössel ist hierbei aus einem flexiblen, medienbeständigen Kunststoff ausgeführt und besitzt in einem an den Anschlagring 9 angrenzenden Abschnitt zur Schubumlenkung einen flexiblen Stösselabschnitt 11. Dieser flexible Stösselabschnitt 11 weist zur Erhöhung der Flexibilität krümmungsaußenseitig transversal geführte Einschnitte auf, die von der krümmungsaußenseitigen Mantellinie in Richtung der Stösselmittelachse verlaufen. Der Stössel 10 selbst zeigt in dieser Ausführungsform ein in transversaler Schnittebene B—B dreiflügeliges Profil, bestehend aus einem zentralen Schubzylinder 20 geringen Durchmessers, der von drei in Radialebenen und voneinander in Umfangsrichtung gleich beabstandet angeordneten Stütz- und Stabilisierungsrippen 21, die in transversaler Schnittebene um jeweils 120° rotiert angeordnet sind, umgeben ist.

In ventilendseitiger Richtung V schließt sich an den flexiblen Stösselabschnitt 11 ein starrer Abschnitt des Stössels 10 an, der ein Stützelement 12 trägt, das sich einerseits an der Gehäuseinnenwand des Durchströmungskanals 8 abstützt und so den Stössel 10 stabilisiert und andererseits gleichzeitig als Anschlagelement 13 für eine Druckfeder 14 dient.

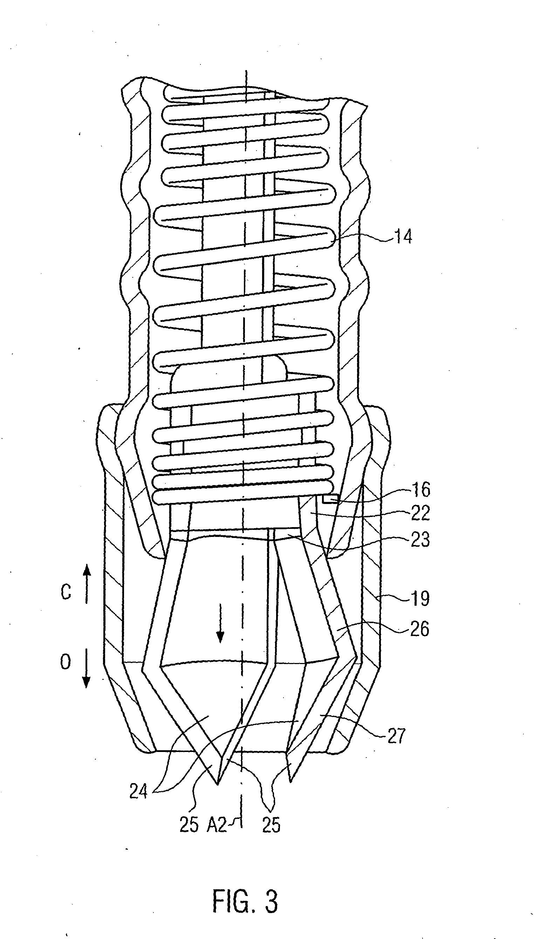

Die Druckfeder 14 ist dabei zwischen vorerwähntem Anschlagelement 13 und einer dem Ventilsitz 15 benachbart angeordneten gehäuseseitigen Auflage 16 eingespannt und dient als Rückstellelement, das den Ventilkörper 17 bei abgekoppeltem Leitungsstutzen 2 in den Ventilsitz 15 zurückzieht und damit das Ventil schließt. Die Funktion der Ventileinheit wird im Zusammenhang mit Fig. 3 näher erläutert.

Weiterhin zeigt die Abbildung eine Schutzhülse 19, die den Ventilabschnitt 18 umschließt und so die Ventileinrichtung gegen Beschädigung bei Montage und im Betrieb schützt.

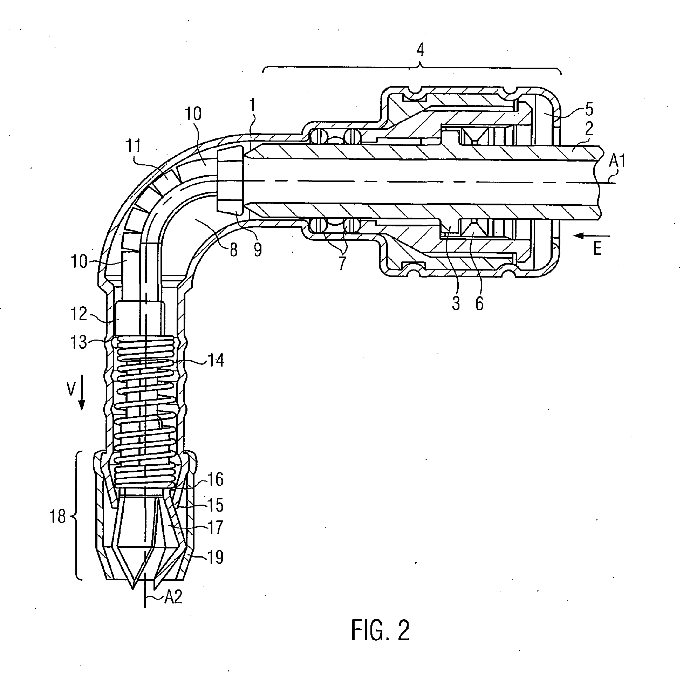

Fig. 2 zeigt dasselbe Ausführungsbeispiel wie Fig. 1, jedoch mit eingestecktem Leitungsstutzen 2 und geöffnetem Ventil. Damit entspricht das Ausführungsbeispiel in Fig. 2 hinsichtlich seiner Bauteile Fig. 1, so dass, um Wiederholungen zu vermeiden, nur auf Unterschiede eingegangen wird.

Fig. 2 zeigt den Leitungsstutzen 2 in arretierter Position innerhalb des Verbindungsabschnitts 4 des Kupplungsgehäuses 1, wobei Verbindungseinrichtungen 6 den Befestigungskragen 3 des Leitungsstutzens 2 hintergreifen und so arretieren. Durch Einschieben des Leitungsstutzens 2 wurde die Anschlageinrichtung 9 in Einsteckrichtung des Leitungsstutzens 2 im Vergleich zu dem in Fig. 1 dargestellten Zustand in Richtung E vorgeschoben und der Druck an den Stössel 10 weitergegeben und dieser in Ventilrichtung V weitergeschoben. Durch diese Bewegung kommt es durch die Bewegung des Anschlagelements 13 in Richtung gehäuseseitiger Auflage 16 zur Kompression der Druckfeder 14, die zwischen dem Anschlagelement 13 und der gehäuseseitigen Auflage 16 eingespannt ist. Gleichzeitig wird der mit der Druckübertragungseinrichtung 10 verbundene Ventilkörper 17 aus dem Ventilsitz 15 abgehoben, wodurch der Durchströmungskanal 8 ventilseitig geöffnet wird und ein Medium hindurchströmen kann. Die Funktion der Ventileinheit wird in Fig. 3 näher erläutert.

Bei Lösen der Verbindungseinrichtung 6 und Abziehen des Leitungsstutzens 2 kommt es durch die Rückstellkraft der Druckfeder 14 zu einer Umkehrung der Vorgänge mit einer gegenläufigen Bewegung der Druckübertragungseinrichtung 10, die den Ventilkörper 17 in den Ventilsitz 15 zurückzieht, wobei sich die Druckübertragungseinrichtung 10 und die Anschlageinrichtung 9 wieder in die in Fig. 1 dargestellten Positionen zurückbewegen.

Fig. 3 zeigt eine Ausschnittsdarstellung des Ventilabschnitts 18 in geöffneter Stellung und erläutert die Funktion der Ventileinheit mit durchströmbarem Ventilkörper 17 genauer, wobei Bezugszeichen sowie Aussagen der anderen Figuren auch auf Fig. 3 zutreffen. Um Wiederholungen zu vermeiden, wird deshalb nur auf neue Aspekte, die Aufbau und Funktion des Ventilkörpers betreffen, eingegangen.

Die Ventileinheit besteht aus einem hohlen, durchströmbaren Ventilkörper 17, der in der dargestellten Weise an seinem zylindrischen Grundkörper mit drei daran angelenkten Sektoreinrichtungen 24, die in geschlossenem Zustand die Form eines Kegelstumpfes 26, der mit dem spitzeren Ende auf dem zylindrischen Grundelement 22 aufsitzt und am stumpfen Ende mit einem basengleichen, invers angeordneten, d.h. an der Kegelbasis gespiegelten, Kegel 27 verbunden ist. Die durch die Sektoreinrichtungen 24 in geschlossenem Zustand gebildete Außenform wird in der weiteren Folge als Doppelkegelstruktur 26,27 bezeichnet. Diese Doppelkegelstruktur 26,27 wird durch drei zueinander im 120° Winkel stehende, von der Mittelachse A2 ausgehende Radialebenen in drei Doppelkegelstruktursektoren oder Sektoreinrichtungen 24 geteilt, die über Biegeabschnitte 23, mit dem Grundelement 22 verbunden sind. Diese Sektoreinrichtungen 24 bilden im geschlossenen Zustand zur jeweils angrenzenden Sektoreinrichtung 24 Dichtkanten 25 aus. Außerdem ist die Doppelkegelstruktur 26,27 des geschlossenen Ventilkörpers 17 durch Zug des mit dem Ventilkörper verbundenen Stössels 10 in den Ventilsitz bewegbar, wo der durch den Kegelstumpfabschnitt 26 gebildete Konus dieser Doppelkegelstruktur 26,27 mit dem Ventilsitz 15 ebenfalls einen dichtenden Kontakt herstellt.

Durch Abheben dieser Doppelkegelstruktur 26,27 aus dem Ventilsitz 15 öffnen sich die aufgrund ihrer dreidimensionalen Struktur vorgespannten Biegeabschnitte 23 selbsttätig und geben den Strömungsquerschnitt frei.

Durch seine Formgebung bildet der am Grundelement 22 angelenkte Kegelstumpfabschnitt 26 der Doppelkegelstruktur 26,27 einen Konus aus, durch den sich die Doppelkegelstruktur 26,27 durch Ziehen in den Ventilsitz 15 mit einer Radialkraft beaufschlagen und dicht schließen lässt, wobei gleichzeitig ein dichter Sitz Doppelkegelstruktur 26,27 im Ventilsitz 15 hergestellt wird.

Durch eine derartige Ventilkonstruktion ist es möglich, ein Ventil mit geradem Durchgang und besonders geringem Durchströmungswiderstand herzustellen.

Zum vorgenannten ersten Ausführungsbeispiel sind weitere Varianten möglich und sinnvoll, deren wichtigste exemplarisch im Folgenden mit kurzen Erläuterungen dargestellt sind:

Anstelle eines hohlen Ventilkörpers 17, wie in obigem Ausführungsbeispiel dargestellt, kann es z.B. für den Einsatz in Hochdruckabsperreinrichtungen sinnvoll oder notwendig sein, den Ventilkörper 17 mit massiven Sektoreinrichtungen 24 z.B. aus einem metallischen Werkstoff auszustatten, so dass im geschlossenen Zustand einen großflächigen Dichtschluss zwischen den Sektoreinrichtungen 24 erzielt und eine hohe Kantenbelastung der Dichtkanten 25, wie sie im Falle eines hohlen Dichtkörpers 17 auftritt, vermieden wird.

Bezüglich der Betätigungsvorrichtungen sind - je nach Anwendungsgebiet - verschiedene Varianten möglich. So ist es denkbar, Rückschlagventile oder Durchflussbegrenzer zu konstruieren, die ohne Betätigungsvorrichtung auskommen und durch Strömungs- und/oder Druckverhältnisse geöffnet und/oder geschlossen werden. Eine weitere Möglichkeit wäre, z.B. Teile der Betätigungseinrichtung mit den Sektoreinrichtungen 24 zu verbinden. Hierbei wäre es beispielsweise denkbar, Widerlager, Auflage- oder Gleitabschnitte an den Sektoreinrichtungen 24 zu integrieren, die ein konisches oder kurvenförmiges Profil besitzen können, um eine Verbesserung des Dichtschlusses oder eine Verschleißreduktion zu erzielen, die aber u.U. auch der Herstellung eines Dichtsitzes mit dem Ventilsitz 15 dienen können. In manchen Fällen kann es auch sinnvoll sein, z.B. eine Zug-Druck-Betätigungseinrichtung 10 direkt an den Sektoreinrichtungen 24 anzulenken und so den Ventilschluss ohne Gegendruck des Ventilkörpers 17 gegen beispielsweise einen Ventilsitz 15 vorzunehmen und den Ventilkörper 17 u.U. direkt abdichtend im Durchströmungskanal 8 anzubringen.

Für eine Vielzahl von Anwendungsfällen wird es hingegen vorzuziehen sein, den Ventilkörper 17 in Axialrichtung beispielsweise gegen einen Außenkonus - in Öffnungsrichtung O oder Schließrichtung C des Ventilkörpers 17 unter Nutzung des öffnungsseitigen 27 oder nicht-öffnungsseitigen 26 Abschnitts der Doppelkonenstruktur 26,27 des Ventilkörpers 17 - vorzuschieben, und so eine radial einwärts gerichtete Kraft zu erzeugen, die einen dichten Radialschluss der Sektoreinrichtungen 24 erzeugt. Besonders zweckmäßig ist es in Anwendungsfällen, in denen eine Zug-Druck-Betätigungseinrichtung 10 zum Einsatz kommt, die mit Abschnitten des Ventilkörpers 17 verbunden ist und diesen durch Zug in die Schließstellung bewegt, den nicht-öffnungsseitigen Konusabschnitt 26 des Ventilkörpers 17, der in den Ventilsitz 15 gezogen wird, zur Erzeugung der Schließkraft einzusetzen.

Auch bezüglich der geometrischen Ausgestaltung des Ventilkörpers 17 sind - je nach Einsatzzweck und Konstruktionsart des Ventils - verschiedene Varianten denkbar. So kann es zweckmäßig sein, den Ventilkörper 17 mit einer polyedrischen Struktur zu versehen, z.B. um diesen mittels gerader Scharnierelemente 23 am Grundkörper 22 der Ventileinheit zu befestigen, wofür sich besonders eine Doppelpyramidenstruktur aus zwei basengleichen dreidimensionalen Simplices oder Tetraedern empfiehlt, da hierbei die Sektoreinrichtungen 24 die besten Selbstzentrierungseigenschaften aufweisen und die Zahl der Scharniere 23 reduziert ist. Außerdem wird ein solcher Ventilkörper 17 gleichzeitig im (polygonalen) Ventilsitz 15 in Rotationsrichtung (syngonal) justiert bzw. ausgerichtet.

In Hinblick auf die Dichtungseigenschaften des Kontaktbereiches zwischen Ventilsitz 15 und Ventilkörper 17 ist hingegen in transversaler Schnittebene ein kreisförmiger Kontakt vorteilhaft. Dies kann durch einen Ventilkörper 17 mit Doppelkegelstruktur 26,27 oder durch den Übergang des Ventilkörpers 17 in Axialrichtung in transversaler Schnittebene von einem polygonalen Querschnitt (im Scharnierbereich) in einen kreisförmigen Querschnitt (im Bereich des Dichtsitzes des Ventilkörpers 17 im Ventilsitz 15) erzielt werden. Ein solcher Ventilkörper 17, der z.B. aus einem polymeren Werkstoff im Spritzgussverfahren einstückig zusammen mit dem Grundelement 22 des Ventilkörpers gefertigt werden kann, kann dabei mit Folienscharnieren oder Biegeabschnitten 23 ausgestattet sein, und bereits im Herstellungsprozess mit einer Vorspannung versehen werden, die den Ventilkörper 17 öffnet und so ein Verharren der Sektoreinrichtungen 24 in geschlossener Position nach dem Abheben des Ventilkörpers 17 aus dem Ventilsitz 15 verhindert.

In manchen Anwendungsfällen kann es auch sinnvoll sein, in medianer Schnittebene den Ventilkörper 17 nicht linear-konisch, sondern mit einem anderen Kurvenverlauf zu versehen, wodurch sich beispielsweise andersförmige Rotationskörper mit nichtdopplekegelstrukturförmiger Geometrie mit z.B. ellipsoiden, paraboloiden oder hyperboloiden Teilflächen ergeben können. Eine solche Formgebung bietet sich z.B. an, um mit einer kurzen Hubbewegung der Zug-Druck-Betätigungseinrichtung Ventilöffnung bzw. Ventilschluss durchzuführen, die Schließkräfte der Sektoreinrichtungen 24 zu erhöhen, oder die Wiederöffnung des Ventils - je nach Ausbildung des Kontaktwinkels zwischen Ventilkörper 17 und Ventilsitz 15 - zu erleichtern, zu erschweren oder zu verhindern. Außerdem können durch eine solche Gestaltung des Ventilkörpers 17 Öffnungswinkel und Durchflussquerschnitt durch den geöffneten Ventilkörper 17 optimiert werden.

Als weitere Variante ist es auch denkbar, die Sektoreinrichtungen 24 nicht mit einem Grundelement 22 zu verbinden, sondern z.B. direkt an der Innenwand des Durchflusskanals 8 oder an der Betätigungsvorrichtung anzulenken, um so das Grundelement 22 einzusparen oder die Flexibilität der Sektoreinrichtungen 24 zu erhöhen.

Das Kupplungsgehäuse 1 der Ventilvorrichtung kann anstelle eines bereits beim Herstellungsprozess gekrümmten Abschnitts einen abwinkelbaren oder flexiblen Abschnitt enthalten, der beispielsweise als Gelenkabschnitt oder durch einen flexiblen z.B. wellrohrähnlichen Abschnitt hergestellt werden kann. Das Kupplungsgehäuse 1 wird dabei bevorzugt aus einem polymeren oder metallischen Werkstoff gefertigt, der u.a. an Einsatzbedingungen (Temperatur, mechanische Belastungen) und Medienbeständigkeit angepasst ausgewählt wird.

Zur Kraftübertragung und Umlenkung sind ebenfalls eine Vielzahl von Möglichkeiten denkbar. So sind durch die Ansprüche eine Vielzahl von Werkstoffen und Ausführungsarten für die Zug- und/oder Druckbetätigungseinrichtung 10 bereits angegeben. Insbesondere bieten sich hierfür die in den Ansprüchen angegebenen Varianten unter Einsatz polymerer oder metallischer Werkstoffe oder einer entsprechenden Hybridkonstruktion an. Ebenso ist auch denkbar, anstelle eines Stössels 10 mit flexiblem Stösselabschnitt 11, zumindest im Schubumlenkungsbereich die Schubumlenkungseinrichtung 11 in Axialrichtung durch mehrere in Anlage bringbare Schubteilelemente auszuführen, die z.B. im Wesentlichen ringförmig oder torusförmig sind oder im Wesentlichen kugel- oder ellipsoidförmig sind und zumindest einen Durchflusskanal 8 aufweisen und/oder im Umfangsbereich angeordnete und umströmbare Rippen tragen und so die Druckkraft, die beim Einstecken des Leitungsstutzens erzeugt wird, auf die Ventileinrichtung übertragen, ohne den Durchströmungskanal 8 zu verschließen. Durch Gleit- und/oder Schutzüberzüge kann dabei das Anwendungsspektrum für die Zug- und/oder Druckbetätigungseinrichtung 10 sinnvoller Werkstoffe erhöht werden, indem beispielsweise die Medienbeständigkeit und/oder Gleiteigenschaften verbessert werden können.

Neben der im ersten Ausführungsbeispiel genannten dreiflügeligen Stößelkonstruktion, aus einem flexiblen medienbeständigen Kunststoff, kann die Zug- und/oder Druckbetätigungseinrichtung 10, je nach Anwendungserfordernissen und Vorgaben, auch ein schlauchförmiges innen durchströmbares Element, z.B. einen Kunststoffschlauch, aufweisen, das zur Erhöhung der Flexibilität transversal geführte Einschnitte aufweisen kann, die bevorzugt von einer Mantellinie oder zwei einander diametral gegenüberliegenden Mantellinien auf die Mittellinie zulaufen und bevorzugt als V-förmige Einkerbungen ausgeführt sind, wodurch sich die Flexibilität beträchtlich erhöhen lässt. Im Falle krümmungsinnenseitig eingebrachter V-förmiger Einkerbungen lässt sich durch eine derartige Konstruktion gleichzeitig der Biegeradius in Minimumrichtung begrenzen, indem die Einkerbungsflanken der V-förmigen Abschnitte die Biegung des flexiblen Stösselabschnitts 11 auf denjenigen Krümmungsradius begrenzen, bei dem die Einkerbungsflanken aneinander anschlagen. Als andere Ausführungsvariante zum Einsatz als Zug- und/oder Druckbetätigungseinrichtung 10 wäre auch ein schraubenfederartiges Element, bevorzugt aus einem metallischen oder polymeren Werkstoff, denkbar, das eine sehr hohe Flexibilität aufweisen und gleichzeitig die Druckkraft wirksam übertragen kann, wenn deren Windungen sich auf Druck gegeneinander abstützen. Ein solches schraubenfederartiges Element kann dabei für sich alleine als Druckübertragungseinrichtung 10 fungieren oder in Verbindung beispielsweise mit einem innenliegenden, z.B. schlauchförmigen oder profilierten Stößelelement.

Ebenfalls wäre vorstellbar, z.B. einem als Zug- und/oder Druckbetätigungseinrichtung 10 fungierenden Schlauchelement zur Stabilisierung Abstandselemente z.B. in Form von voneinander beabstandeten metallischen Ringen beizuordnen, die diese Schlauchelemente stabilisieren und die in ähnlicher Weise, wie die vorerwähnten V-förmigen Einschnitte, die Biegung auf denjenigen Biegungsradius begrenzen können, bei dem die Metallringe krümmungsinnenseitig miteinander in Anlage kommen.

Für bestimmte Anwendungsfälle kann es sinnvoll sein, die Zug- und/oder Druckbetätigungseinrichtung 10 innerhalb des Durchströmungskanals durch Stützeinrichtungen 12 zu stabilisieren, die sich gegen die Innenwand des Durchströmungskanals 8 des Kupplungsgehäuses 1 abstützen, um Ausweichbewegung der Zug- und/oder Druckbetätigungseinrichtung 10 z.B. bei Druckausübung zu verhindern. Hierbei wären z.B. Gleitelemente, wie auf die Zug- und/oder Druckbetätigungseinrichtung 10 aufschiebbare Gleitringe, denkbar. Ebenso ist es auch möglich, entweder die Zug- und/oder Druckbetätigungseinrichtung 10 und/oder die Innenwand des Hohlraumabschnitts des Durchströmungskanals 8 des Kupplungsgehäuses 1, der die Zug- und/oder Druckbetätigungseinrichtung 10 umschließt, mit Gleitelementen, Gleit-Abstandselementen oder Gleit-Führungselementen zu versehen, wodurch sich eine Reibungsreduzierung, Beabstandungsfunktion, Wegbegrenzung und/oder Drehsicherung erzielen lässt. Solche Abschnitte können z.B. als in axialer Richtung durchlaufende oder unterbrochene Rippen oder Flügel ausgeführt sein, und auch in dafür vorgesehenen, komplementären Nuten am jeweils anderen Bauteil entlanggeführt werden.

Der vorerwähnte Anschlagring 9 ist nicht in jedem Fall obligatorisch, jedoch zumeist vorteilhaft und dient dem Verschleißschutz und der sicheren Druckübertragung zwischen Leitungsstutzen 2 und Zug- und/oder Druckbetätigungseinrichtung 10. Dabei soll das Anschlagelement 9 einen möglichst sicheren Kontakt mit dem Leitungsstutzen 2 ausbilden und gleichzeitig den Durchströmungsweg vom Leitungsstutzen 2 in dem Durchströmungskanal möglichst wenig beeinträchtigen. Zweckmäßigerweise wird das Anschlagelement 9 auch an die Konstruktion der Zug- und/oder Druckbetätigungseinrichtung 10 angepasst. Das heißt, dass im Falle des vorbeschriebenen dreiflügeligen Stößels 10 eventuell eine ebenfalls mit drei Radialflügeln oder -rippen 21 ausgestattete und in Umfangsrichtung mit einem zylindrischen Stabilisierungsabschnitt umgebene Anschlageinrichtung 9 sinnvoll sein könnte. Im Falle einer hohlen durchströmbaren Zug- und/oder Druckbetätigungseinrichtung 10 kann es dagegen vorteilhafter sein, die Anschlageinrichtung 9 mit einer großen axialen Zentralöffnung zu versehen, die mit der hohlen Zug- und/oder Druckbetätigungseinrichtung 10 in Flucht angeordnet ist. Wie die Zug- und/oder Druckbetätigungseinrichtung 10 kann auch die Anschlageinrichtung 9 am äußeren Umfang in ähnlicher Weise zusätzlich mit Gleit- und/oder Führungsabschnitten versehen sein.

In einer anderen Variante der Ventilvorrichtung kann es sinnvoll sein, die Druckfeder 14 durch eine Zugfeder zu ersetzen, z.B., wenn die Zug- und/oder Druckbetätigungseinrichtung 10 ausschließlich zur Druckübertragung vorgesehen oder zur Übertragung von Zugkräften ungeeignet ist und deshalb nicht zum Zurückziehen des Ventilkörpers 17 in den Ventilsitz 15 genutzt werden soll oder kann.

In der anderen Variante endet die Kupplungseinrichtung mit Ventilvorrichtung nicht in einem (endständigen) Ventilabschnitt 18, sondern die Ventileinrichtung ist inmitten einer längeren Leitungseinrichtung angeordnet.

Für bestimmte andere Anwendungserfordernisse kann eine Variante der Kupplungseinrichtung mit Ventilvorrichtung sinnvoll sein, bei der die Ventileinrichtung räumlich sehr weit vom Verbindungsabschnitt 4 getrennt angeordnet ist. So wäre es z.B. denkbar, eine Kraftstoffleitung mit einer solchen Kupplungseinrichtung auszustatten, bei der die Sperrstelle aus dem Motorraum heraus verlagert und tankseitig angeordnet ist, wodurch sich Sicherheitsvorteile im Falle eines Unfalls oder Motorraumbrandes sowie Platzvorteile für die Konstruktion mit der Möglichkeit der Optimierung des Durchströmungswiderstands der Ventileinheit ergeben können. Bezüglich des vorgenannten Sicherheitsaspekts wäre es denkbar, durch die geometrische Gestaltung von Kupplungseinrichtung und Leitungsverlauf bzw. die Materialwahl und gegebenenfalls auch Sollbruchstellen, eine Kupplungseinrichtung mit ausgelagerter Ventileinheit zu fertigen, die im Falle eines Unfalls oder Motorraumbrandes einen deformationsbedingten bzw. temperaturbedingten Selbstschluss durchführt und so die Kraftstoffzufuhr unterbricht.

## Patentansprüche

1. Ventilvorrichtung, vorzugsweise für eine Leitungs- oder Verbindungseinrichtung, mit einem Ventilkörper (17), der von einer geöffneten Stellung in eine geschlossene Stellung überführbar ist, wobei der Ventilkörper (17) bewegbare Sektoreinrichtungen (24) umfasst, welche Dichtkanten oder Dichtflächen (25) aufweisen, über die in einem geschlossenen Zustand ein dichtender Kontakt der Sektoreinrichtung (24) zu angrenzenden Dichtkanten oder Dichtflächen (25) herstellbar ist, und diese Sektoreinrichtungen (24) beim Überführen des Ventilkörpers (17) in die geöffnete Stellung zumindest abschnittsweise in Radialrichtung von der Mittelachse (A2) entfernbar sind und einen Durchströmungsquerschnitt freigeben, **dadurch gekennzeichnet, dass** die Sektoreinrichtungen (24) relativ zu einem Ventilsitz (15) in Axialrichtung bewegbar sind, wobei die Sektoreinrichtungen (24) durch Gegenschieben gegen den Ventilsitz (15) radial aufeinander zubewegbar und schließbar sind und durch Entfernen vom Ventilsitz (15) öffenbar sind.

2. Ventilvorrichtung nach Anspruch 1, **dadurch gekennzeichnet, dass** im geschlossenen Zustand ein dichtender Kontakt zwischen den Dichtkanten oder Dichtflächen (25) einander benachbarter Sektoreinrichtungen (24) herstellbar ist und sich die in geschlossenem Zustand aneinander anliegenden Dichtkanten oder Dichtflächen (25) einander benachbarter Sektoreinrichtungen (24) beim Überführen des Ventilkörpers (17) in die geöffnete Stellung zumindest abschnittsweise in Umfangsrichtung voneinander entfernen.

3. Ventilvorrichtung nach zumindest einem der vorangegangenen Ansprüche, **dadurch gekennzeichnet, dass** der Ventilkörper (17) mit mehreren Sektoreinrichtungen (24) im geschlossenen Zustand dichtend mit einer Außenkontur des Ventilkörpers (17) mit dem Ventilsitz (15) in Anlage bringbar ist.

4. Ventilvorrichtung nach zumindest einem der vorangegangenen Ansprüche, **dadurch gekennzeichnet, dass** der Ventilkörper (17) hohl ist, wobei der Ventilkörper (17) im geschlossenen Zustand eine in Richtung eines Öffnungsendes (O) geschlossene Hohlform ausgebildet, die eine Öffnung in Richtung eines Nicht-Öffnungsendes (C) des Ventilkörpers (17) aufweist, und dessen Sektoreinrichtungen (24) Dichtkanten (25) ausbilden, durch die im geschlossenen Zustand ein dichtender Kontakt zwischen den Sektoreinrichtungen (24) herstellbar ist,

5. Ventilvorrichtung nach zumindest einem der vorangegangenen Ansprüche, **dadurch gekennzeichnet, dass** die Sektoreinrichtungen (24) durch eine Betätigungsvorrichtung von der geöffneten Stellung in die geschlossene Stellung überführbar sind.

6. Ventilvorrichtung nach zumindest einem der vorangegangenen Ansprüche, **dadurch gekennzeichnet, dass** die Betätigungsvorrichtung (10) zumindest abschnittsweise mechanisch mit den Sektoreinrichtungen (24) verbunden ist.

7. Ventilvorrichtung nach zumindest einem der vorangegangenen Ansprüche, **dadurch gekennzeichnet, dass** die Betätigungsvorrichtung (10) mit den Sektoreinrichtungen (24) mechanisch unverbunden und relativ zu den Sektoreinrichtungen in Axialrichtung bewegbar ist.

8. Ventilvorrichtung nach zumindest einem der vorangegangenen Ansprüche, **dadurch gekennzeichnet, dass** die Sektoreinrichtungen (24) des Ventilkörpers (17) durch Ziehen des Ventilkörpers (17) in den Ventilsitz (15) schließbar sind.

9. Ventilvorrichtung nach zumindest einem der vorangegangenen Ansprüche, **dadurch gekennzeichnet, dass** der Ventilkörper (17) mit einer Zug- und/oder Druckbetätigungseinrichtung (10) verbindbar ist, durch die der Ventilkörper (17) relativ zum Ventilsitz (15) bewegbar ist.

10. Ventitvorrichtung nach zumindest einem der vorangegangenen Ansprüche, **dadurch gekennzeichnet, dass** der Ventilkörper (17) an seiner Außenseite eine Mehrzahl ebener Flächenelemente aufweist.

11. Ventilvorrichtung nach zumindest einem der vorangegangenen Ansprüche, **dadurch gekennzeichnet, dass** der Ventilkörper (17) an seiner Außenseite kegelmantelsektorförmige oder kegelstumpfmantelsektorförmige Teiloberflächen aufweist.

12. Ventilvorrichtung nach zumindest einem der vorangegangenen Ansprüche, **dadurch gekennzeichnet, dass** der Ventilkörper (17) an seiner Außenseite ellipsoide, paraboloide oder hyperboloide Teiloberflächen aufweist.

13. Ventilvorrichtung nach zumindest einem der vorangegangenen Ansprüche, **dadurch gekennzeichnet, dass** der geschlossene Ventilkörper (17) zwei basengleiche und an den Basen miteinander verbundene Kegelstrukturen (26,27) aufweist, deren eine, in Richtung des Öffnungsendes (O) angeordnete Kegelstruktur (27) in ihrer Außenform einem Kegelmantel und deren andere, in Richtung des Nicht-Offnungsendes (C) angeordnete Kegelstruktur (26) in ihrer Außenform einem Kegelstumpfmantel entspricht und der geschlossene Ventilkörper (17) in transversaler Schnittebene kreisförmig ist.

14. Ventilvorrichtung nach zumindest einem der vorangegangenen Ansprüche, **dadurch gekennzeichnet, dass** der geschlossene Ventilkörper (17) zwei basengleiche und an den Basen miteinander verbundene Pyramidenstrukturen aufweist, deren eine, in Richtung des Öffnungsendes (O) angeordnete Pyramidenstruktur in ihrer Außenform einem Pyramidenmantel und deren, andere, in Richtung des Nicht-Öffnungsendes (C) angeordnete Pyramidenstruktur in ihrer Außenform einem Pyramidenstumpfmantel entspricht und der geschlossene Ventilkörper (17) in transversaler Schnittebene ein reguläres Polygon bildet.

15. Ventilvorrichtung nach zumindest einem der vorangegangenen Ansprüche, **dadurch gekennzeichnet, dass** der geschlossene Ventilkörper (17) zumindest an dem geschlossenen Spitzende des Pyramidenscheitels der in Richtung des Öffnungsendes (O) gelegenen Pyramide, in Radiatrichtung öffenbare Sektoreinrichtungen (24) aufweist, die Dichtkanten (25) ausbilden, welche zumindest die Außenkanten der in Richtung des Öffnungsendes (O) angeordneten Pyramide umfassen.

16. Ventilvorrichtung nach zumindest einem der vorangegangenen Ansprüche, **dadurch gekennzeichnet, dass** die Pyramidenstrukturen aus geraden, dreidimensionalen Simplices oder Tetraedern aufgebaut sind und in transversaler Schnittebene ein gleichseitiges Dreieck bilden.

17. Ventilvorrichtung nach zumindest einem der vorangegangenen Ansprüche, **dadurch gekennzeichnet, dass** der rotationssymmetrische oder polyedrische, achsensymmetrische Ventilkörper (17) eine transversale Äquatorialebene aufweist, in der dessen Transversalschnitt ein Flächenmaximum ausbildet, von der aus sich der Ventilkörper (17) in Schließrichtung im Wesentlichen konisch verjüngt.

18. Ventilvorrichtung nach zumindest einem der vorangegangenen Ansprüche, **dadurch gekennzeichnet, dass** der Ventilkörper (17) in transversaler Äquatorialebene, in der dessen Transversalschnitt ein Flächenmaximum aufweist, einen Kreis umschreibt von der aus sich der Ventilkörper (17) in Schließrichtung (C) im Wesentlichen konisch verjüngt und in transversaler Schnittebene in ein Polygon übergeht.

19. Ventilvorrichtung nach zumindest einem der vorangegangenen Ansprüche, **dadurch gekennzeichnet, dass** der Ventilkörper (17) eine ungerade Zahl von Sektoreinrichtungen (24), vorzugsweise drei Sektoreinrichtungen (24), aufweist, und diese von der Mittelachse (A2) aus gleiche Sektorwinkel, vorzugsweise 120° Winkel, einschließen.

20. Ventilvorrichtung nach zumindest einem der vorangegangenen Ansprüche, **dadurch gekennzeichnet, dass** der Ventilkörper (17) mindestens ein Grundelement (22) umfasst, an dem die Sektoreinrichtungen (24) angelenkt sind.

21. Ventilvorrichtung nach zumindest einem der vorangegangenen Ansprüche, **dadurch gekennzeichnet, dass** die Sektoreinrichtungen (24) mittels Scharnieren, vorzugsweise Folienschamieren, oder Biegeabschnitten (23) mit dem Grundelement (22) des Ventilkörpers (17) verbunden sind und der Ventilkörper (17) vorzugsweise einstückig ausgebildet ist.

22. Ventilvorrichtung nach zumindest einem der vorangegangenen Ansprüche, **dadurch gekennzeichnet, dass** der Ventilkörper (17) abschnittsweise unterschiedliche Werkstoffe aufweist und vorzugsweise in einem Mehrkomponenten-Formverfahren herstellbar ist.

23. Ventilvorrichtung nach zumindest einem der vorangegangenen Ansprüche, **dadurch gekennzeichnet, dass** der Ventilkörper (17) im Anlenkungs- und Biegebereich der Sektoreinrichtungen (24) im Vergleich zu den daran angrenzenden Bereichen des Ventilkörpers (17) einen Werkstoff höherer Elastizität und/oder geringeren E-Moduls aufweist.

24. Ventilvorrichtung nach zumindest einem der vorangegangenen Ansprüche, **dadurch gekennzeichnet, dass** der Ventilkörper (17) im Bereich der Dichtkanten (25) der Sektoreinrichtungen (24) einen Dichtungswerkstoff aufweist.

25. Ventilvorrichtung nach zumindest einem der vorangegangenen Ansprüche, **dadurch gekennzeichnet, dass** der Ventilkörper (17) im Ventilsitzbereich der Sektoreinrichtungen (24) einen Dichtungswerkstoff aufweist.

26. Ventilvorrichtung nach zumindest einem der vorangegangenen Ansprüche, **dadurch gekennzeichnet, dass** die Sektoreinrichtungen (24) in geöffneter Stellung vorgespannt sind.

27. Ventilvorrichtung nach zumindest einem der vorangegangenen Ansprüche, **dadurch gekennzeichnet, dass** die Biegeabschnitte (23) vorzugsweise eine dreidimensionale Form aufweisen, wobei die Werkstoffelastizität zur Vorspannung der Sektorenrichtungen (24) ausnutzbar ist.

28. Ventilvorrichtung nach Anspruch 9, **dadurch gekennzeichnet, dass** die Zug- und/oder Druckbetätigungseinrichtung (10) federelastische Eigenschaften aufweist und dafür vorgesehen ist, den Ventilkörper (17) in Schließrichtung desselben mit einer Rückstellkraft zu beaufschlagen und den Ventilkörper (17) bei Entfernen des Endabschnitts der Leitungseinrichtung (2) oder der zweiten Verbindungseinrichtung aus dem Verbindungsbereich (4) des Ventilgehäuses (1) von der geöffneten Stellung in die geschlossene Stellung zu überführen.

29. Ventilvorrichtung nach zumindest einem der vorangegangenen Ansprüche, **dadurch gekennzeichnet, dass** die Ventileinrichtung eine Rückstelleinrichtung (14) umfasst, welche den Ventilkörper (17) in Schließrichtung (C) desselben mit einer Rückstellkraft beaufschlagt und dafür vorgesehen ist, den Ventilkörper (17) von der geöffneten Stellung in die geschlossene Stellung zu überführen.

30. Ventilvorrichtung nach zumindest einem der vorangegangenen Ansprüche, **dadurch gekennzeichnet, dass** die Rückstelleinrichtung eine Schraubenfeder (14) aufweist.

31. Ventilvorrichtung nach zumindest einem der vorangegangenen Ansprüche, **dadurch gekennzeichnet, dass** die Rückstelleinrichtung (14) eine Zugfeder ist.

32. Ventilvorrichtung nach Anspruch 30, **dadurch gekennzeichnet, dass** die Schraubenfeder (14) innerhalb des Durchströmungskanals (8) des Gehäuses (1), zumindest Abschnitte der Zug- und/oder Druckbetätigungseinrichtung (10) umschließend, zwischen der Innenwand des Gehäuses (1) und der Zug- und/oder Druckbetätigungseinrichtung (10) angeordnet ist.

33. Ventilvorrichtung nach zumindest einem der vorangegangenen Ansprüche, **dadurch gekennzeichnet, dass** die Schraubenfeder eine Druckfeder (14) ist und zwischen einem mit der Zug- und/oder Druckbetätigungseinrichtung (10) mechanisch verbundenen Anschlagelement (13) und einer davon axial beabstandeten und im Bezug auf dieses Anschlagelement (13) in Durchströmungsrichtung näher am Ventilkörper (17) gelegenen gehäuseseitigen Auflage (16) einspannbar ist, wobei der Ventilkörper (17) über die Zug- und/oder Druckbetätigungseinrichtung (10) durch Zug in Schließstellung überführbar und die Druckfeder (14) bei Überführen des Ventils in die geschlossene Stellung auf Druck belastbar ist.

34. Ventilvorrichtung nach Anspruch 33, **dadurch gekennzeichnet, dass** die gehäuseseitigen Auflage (16) der Druckfeder (14) des Ventilsitzes (15) benachbart angeordnet ist.

35. Ventilvorrichtung nach zumindest einem der vorangegangenen Ansprüche, **dadurch gekennzeichnet, dass** der Ventilkörper (17) in Radialrichtung von einer Schutzhülse (19) umgeben ist.

36. Ventilvorrichtung nach zumindest einem der vorangegangenen Ansprüche, **dadurch gekennzeichnet, dass** die Schutzhülse (19) den Ventilkörper (17) zumindest in dessen geschlossenem Zustand in Radialrichtung im Wesentlichen vollständig umgibt.

37. Ventilvorrichtung nach Anspruch 35, **dadurch gekennzeichnet, dass** die Schutzhülse (19) mit dem Ventilgehäuse (1) unverlierbar verbindbar und vorzugsweise mit diesem einstückig ausgebildet ist.

## Claims

1. Valve device for a line device or connecting device, having a valve body (17) which can be transferred from an open position to a closed position, the valve body (17) comprising movable sector devices (24) having sealing edges or sealing surfaces (25) via which, in a closed state, a sealing contact of the sector device (24) to adjoining sealing edges or sealing surfaces (25) can be established, and these sector devices (24) being at least partially movable away in the radial direction from the centre axis (A2) when the valve body (17) is transferred to the open position, and freeing a through-flow cross-section, **characterised in that** the sector devices (24) are movable in the axial direction relative to a valve seat (15), the sector devices (24) being movable radially towards one another and closable by pushing against the valve seat (15) and being openable by movement away from the valve seat (15).

2. Valve device according to Claim 1, **characterised in that**, in the closed state, a sealing contact between the sealing edges or sealing surfaces (25) of mutually adjacent sector devices (24) can be established, and the sealing edges or sealing surfaces (25), bearing against one another in the closed state, of mutually adjacent sector devices (24) at least partially move away from one another in the circumferential direction when the valve body (17) is transferred to the open position.

3. Valve device according to at least one of the preceding claims, **characterised in that** the valve body (17) having a plurality of sector devices (24), in the closed state, can be brought into sealing contact with the valve seat (15) by an outer contour of the valve body (17).

4. Valve device according to at least one of the preceding claims, **characterised in that** the valve body (17) is hollow, the valve body (17) in the closed state forming a hollow shape which is closed in the direction of an opening end (O) and which has an opening in the direction of a non-opening end (C) of the valve body (17), and its sector devices (24) forming sealing edges (25) by which, in the closed state, a sealing contact between the sector devices (24) can be established.

5. Valve device according to at least one of the preceding claims, **characterised in that** the sector devices (24) can be transferred from the open position to the closed position by an actuating device.

6. Valve device according to at least one of the preceding claims, **characterised in that** the actuating device (10) is mechanically connected at least partially to the sector devices (24).

7. Valve device according to at least one of the preceding claims, **characterised in that** the actuating device (10) is mechanically unconnected to the sector devices (24) and is movable in the axial direction relative to the sector devices.

8. Valve device according to at least one of the preceding claims, **characterised in that** the sector devices (24) of the valve body (17) can be closed by pulling the valve body (17) into the valve seat (15).

9. Valve device according to at least one of the preceding claims, **characterised in that** the valve body (17) can be connected to a pull- and/or push-actuating device (10), by which the valve body (17) can be moved relative to the valve seat (15).

10. Valve device according to at least one of the preceding claims, **characterised in that** the valve body (17) has on its outer side a plurality of plane surface elements.

11. Valve device according to at least one of the preceding claims, **characterised in that** the valve body (17) has on its outer side part-surfaces in the shape of a sector of an envelope of a cone or in the shape of a sector of an envelope of a truncated cone.

12. Valve device according to at least one of the preceding claims, **characterised in that** the valve body (17) has on its outer side ellipsoid, paraboloid or hyperboloid part-surfaces.

13. Valve device according to at least one of the preceding claims, **characterised in that** the closed valve body (17) has two conical structures (26, 27) with identical bases and connected to one another at the bases, of which one conical structure (27) arranged in the direction of the opening end (O) corresponds in its external shape to an envelope of a cone and of which the other conical structure (26) arranged in the direction of the non-opening end (C) corresponds in its external shape to an envelope of a truncated cone, and the closed valve body (17) is circular in the transverse section plane.

14. Valve device according to at least one of the preceding claims, **characterised in that** the closed valve body (17) has two pyramidal structures with identical bases and connected to one another at the bases, of which one pyramidal structure arranged in the direction of the opening end (O) corresponds in its external shape to an envelope of a pyramid and of which the other pyramidal structure arranged in the direction of the non-opening end (C) corresponds in its external shape to an envelope of a truncated pyramid, and the closed valve body (17) forms a regular polygon in the transverse section plane.

15. Valve device according to at least one of the preceding claims, **characterised in that** the closed valve body (17) has, at least at the closed pointed end of the pyramid vertex of the pyramid located in the direction of the opening end (O), sector devices (24) which can open in the radial direction and form sealing edges (25) which comprise at least the outer edges of the pyramid arranged in the direction of the opening end (O).

16. Valve device according to at least one of the preceding claims, **characterised in that** the pyramidal structures are constructed from straight, three-dimensional simplices or tetrahedrons and form an equilateral triangle in the transverse section plane.

17. Valve device according to at least one of the preceding claims, **characterised in that** the rotationally symmetrical or polyhedral, axially symmetrical valve body (17) has a transverse equatorial plane in which the transverse section of the valve body forms an areal maximum, from which the valve body (17) tapers substantially conically in the closing direction.

18. Valve device according to at least one of the preceding claims, **characterised in that** the valve body (17), in the transverse equatorial plane in which the transverse section of the valve body has an areal maximum, circumscribes a circle from which the valve body (17) in the closing direction (C) tapers substantially conically and merges into a polygon in the transverse section plane.

19. Valve device according to at least one of the preceding claims, **characterised in that** the valve body (17) has an odd number of sector devices (24), preferably three sector devices (24), and these sector devices enclose equal sector angles, preferably 120°, from the centre axis (A2).

20. Valve device according to at least one of the preceding claims, **characterised in that** the valve body (17) comprises at least one base element (22), on which the sector devices (24) are articulated.

21. Valve device according to at least one of the preceding claims, **characterised in that** the sector devices (24) are connected to the base element (22) of the valve body (17) by means of hinges, preferably film hinges, or bending sections (23), and the valve body (17) is preferably formed in one piece.

22. Valve device according to at least one of the preceding claims, **characterised in that** the valve body (17) has different materials in certain sections and can preferably be produced by a multi-component moulding method.

23. Valve device according to at least one of the preceding claims, **characterised in that** the valve body (17) has a material of higher elasticity and/or lower modulus of elasticity in the articulating and bending region of the sector devices (24) as compared with the adjoining regions of the valve body (17).

24. Valve device according to at least one of the preceding claims, **characterised in that** the valve body (17) has a sealing material in the region of the sealing edges (25) of the sector devices (24).

25. Valve device according to at least one of the preceding claims, **characterised in that** the valve body (17) has a sealing material in the valve-seat region of the sector devices (24).

26. Valve device according to at least one of the preceding claims, **characterised in that** the sector devices (24) are prestressed into the open position.

27. Valve device according to at least one of the preceding claims, **characterised in that** the bending sections (23) preferably have a three-dimensional shape, the material elasticity being utilisable for the prestressing of the sector devices (24).

28. Valve device according to Claim 9, **characterised in that** the pull- and/or push-actuating device (10) has spring-elastic properties and is provided for applying a restoring force to the valve body (17) in the closing direction of the same and for transferring the valve body (17) from the open position to the closed position when the end section of the line device (2) or of the second connecting device is removed from the connecting region (4) of the valve housing (1).

29. Valve device according to at least one of the preceding claims, **characterised in that** the valve device comprises a restoring device (14) which applies a restoring force to the valve body (17) in the closing direction (C) of the same and is provided for transferring the valve body (17) from the open position to the closed position.

30. Valve device according to at least one of the preceding claims, **characterised in that** the restoring device has a helical spring (14).

31. Valve device according to at least one of the preceding claims, **characterised in that** the restoring device (14) is a tension spring.

32. Valve device according to Claim 30, **characterised in that** the helical spring (14) is arranged inside the through-flow duct (8) of the housing (1) between the inner wall of the housing (1) and the pull- and/or push-actuating device (10) in a manner enclosing at least sections of the pull- and/or push-actuating device (10).

33. Valve device according to at least one of the preceding claims, **characterised in that** the helical spring is a compression spring (14) and can be clamped between a stop element (13), mechanically connected to the pull- and/or push-actuating device (10), and a housing-side support (16) spaced axially therefrom and located, in the through-flow direction, closer to the valve body (17) in relation to this stop element (13), the valve body (17) being able to be transferred to the closed position by pulling via the pull- and/or push-actuating device (10) and the compression spring (14) being loadable in compression when the valve is transferred to the closed position.

34. Valve device according to Claim 33, **characterised in that** the housing-side support (16) of the compression spring (14) is arranged adjacent to the valve seat (15).

35. Valve device according to at least one of the preceding claims, **characterised in that** the valve body (17) is surrounded by a protective sleeve (19) in the radial direction.

36. Valve device according to at least one of the preceding claims, **characterised in that** the protective sleeve (19) surrounds the valve body (17) substantially completely in the radial direction, at least in the closed state of the valve body.

37. Valve device according to Claim 35, **characterised in that** the protective sleeve (19) can be captively connected to the valve housing (1) and is preferably formed in one piece therewith.

## Revendications

1. Ensemble de soupape, de préférence pour un dispositif de conduite ou un dispositif de raccordement, avec un corps de soupape (17) qui est apte à être amené d'une position ouverte à une position fermée, le corps de soupape (17) comprenant des dispositifs en forme de secteurs (24) mobiles qui présentent des arêtes ou surfaces d'étanchéité (25) par l'intermédiaire desquelles un contact d'étanchéité entre le dispositif en forme de secteurs (24) et des arêtes ou surfaces d'étanchéité (25) voisines peut être réalisé, dans une position fermée, et ces dispositifs en forme de secteurs (24), lors du passage du corps de soupape (17) à la position ouverte, sont aptes à être éloignés au moins par endroits, dans le sens radial, de l'axe médian (A2) et libèrent une section transversale d'écoulement,
**caractérisé en ce que** les dispositifs en forme de secteurs (24) sont mobiles dans le sens axial par rapport à un siège de soupape (15), les dispositifs en forme de secteurs (24) étant aptes à se rapprocher radialement et à se fermer en étant poussés contre le siège de soupape (15), et étant aptes à s'ouvrir en étant éloignés du siège de soupape (15).

2. Ensemble de soupape selon la revendication 1, **caractérisé en ce que** dans la position fermée, un contact d'étanchéité peut être réalisé entre les arêtes ou surfaces d'étanchéité (25) de dispositifs en forme de secteurs (24) voisins les uns des autres, et les arêtes ou surfaces d'étanchéité (25), appliquées les unes contre les autres dans la position fermée, de dispositifs (24) voisins s'éloignent au moins par endroits les unes des autres, dans le sens circonférentiel, lorsque le corps de soupape (17) passe dans la position ouverte.

3. Ensemble de soupape selon l'une au moins des revendications précédentes, **caractérisé en ce que** dans la position fermée, le corps de soupape (17) pourvu de plusieurs dispositifs en forme de secteurs (24) est apte à être amené de manière étanche contre le siège de soupape (15), avec un contour extérieur du corps de soupape (17).

4. Ensemble de soupape selon l'une au moins des revendications précédentes, **caractérisé en ce que** le corps de soupape (17) est creux, le corps de soupape (17) définissant dans la position fermée une forme creuse qui est fermée dans le sens d'une extrémité d'ouverture (O) et qui présente une ouverture dans le sens d'une extrémité de non ouverture (C) du corps de soupape (17), et les dispositifs en forme de secteurs (24) de ce dernier forment des arêtes d'étanchéité (25) grâce auxquelles un contact d'étanchéité peut être réalisé entre les dispositifs en forme de secteurs (24), dans la position fermée.

5. Ensemble de soupape selon l'une au moins des revendications précédentes, **caractérisé en ce que** les dispositifs en forme de secteurs (24) sont aptes à passer à l'aide d'un dispositif d'actionnement de la position ouverte à la position fermée.

6. Ensemble de soupape selon l'une au moins des revendications précédentes, **caractérisé en ce que** le dispositif d'actionnement (10) est relié mécaniquement, au moins par endroits, aux dispositifs en forme de secteurs (24).

7. Ensemble de soupape selon l'une au moins des revendications précédentes, **caractérisé en ce que** le dispositif d'actionnement (10) n'est pas relié mécaniquement aux dispositifs en forme de secteurs (24) et est mobile dans le sens axial par rapport à ceux-ci.

8. Ensemble de soupape selon l'une au moins des revendications précédentes, **caractérisé en ce que** les dispositifs en forme de secteurs (24) du corps de soupape (17) sont aptes à se fermer grâce à la rétraction du corps de soupape (17) dans le siège de soupape (15).

9. Ensemble de soupape selon l'une au moins des revendications précédentes, **caractérisé en ce que** le corps de soupape (17) est apte à être relié à un dispositif d'actionnement par traction et/ou par pression (10) à l'aide duquel il est mobile par rapport au siège de soupape (15).

10. Ensemble de soupape selon l'une au moins des revendications précédentes, **caractérisé en ce que** le corps de soupape (17) présente sur son côté extérieur plusieurs éléments plans.

11. Ensemble de soupape selon l'une au moins des revendications précédentes, **caractérisé en ce que** le corps de soupape (17) présente sur son côté extérieur des surfaces partielles en forme de secteurs coniques ou tronconiques.

12. Ensemble de soupape selon l'une au moins des revendications précédentes, **caractérisé en ce que** le corps de soupape (17) présente sur son côté extérieur des surfaces partielles elliptiques, paraboliques ou hyperboliques.

13. Ensemble de soupape selon l'une au moins des revendications précédentes, **caractérisé en ce que** le corps de soupape (17) fermé présente deux structures coniques (26, 27) de même base et reliées au niveau de leur base, l'une de ces structures coniques (27), disposée dans le sens de l'extrémité d'ouverture (O), correspondant par sa forme extérieure à une surface latérale conique tandis que l'autre structure conique (26), disposée dans le sens de l'ouverture non ouverte (C), correspond par sa forme extérieure à une surface latérale tronconique, et le corps de soupape (17) fermé a un plan de coupe transversal circulaire.

14. Ensemble de soupape selon l'une au moins des revendications précédentes, **caractérisé en ce que** le corps de soupape (17) fermé présente deux structures pyramidales de même base et reliées au niveau des bases, l'une de ces structures pyramidales, disposée dans le sens de l'extrémité d'ouverture (O), correspondant par sa forme extérieure à une surface latérale pyramidale tandis que l'autre structure pyramidale, disposée dans le sens de l'ouverture non ouverte (C), correspond par sa forme extérieure à une surface latérale de pyramide tronquée, et le corps de soupape (17) fermé forme dans un plan de coupe transversal un polygone régulier.

15. Ensemble de soupape selon l'une au moins des revendications précédentes, **caractérisé en ce que** le corps de soupape (17) fermé présente, au moins à l'extrémité pointue fermée du sommet de la pyramide située dans le sens de l'extrémité d'ouverture (O), des dispositifs en forme de secteurs (24) aptes à s'ouvrir dans le sens radial et formant des arêtes d'étanchéité (25) qui entourent au moins les arêtes extérieures de la pyramide disposée dans le sens de l'extrémité d'ouverture (O).

16. Ensemble de soupape selon l'une au moins des revendications précédentes, **caractérisé en ce que** les structures pyramidales sont constituées par des simplexes ou des tétraèdres droits à trois dimensions et forment dans le plan de coupe transversal un triangle équilatéral.

17. Ensemble de soupape selon l'une au moins des revendications précédentes, **caractérisé en ce que** le corps de soupape (17) à symétrie axiale et à symétrie de révolution ou polyédrique présente un plan équatorial transversal dans lequel sa coupe transversale forme un maximum de surface à partir duquel il a une forme effilée globalement en cône dans le sens de fermeture.

18. Ensemble de soupape selon l'une au moins des revendications précédentes, **caractérisé en ce que** le corps de soupape (17), dans le plan équatorial transversal dans lequel sa coupe transversale présente un maximum de surface, décrit un cercle à partir duquel il a une forme effilée globalement en cône dans le sens de fermeture (C) et se transforme en polygone dans le plan de coupe transversal.

19. Ensemble de soupape selon l'une au moins des revendications précédentes, **caractérisé en ce que** le corps de soupape (17) présente un nombre impair de dispositifs en forme de secteurs (24), de préférence trois dispositifs de secteurs (24), et ceux-ci définissent à partir de l'axe médian (A2) des angles de secteur égaux, de préférence des angles de 120°.

20. Ensemble de soupape selon l'une au moins des revendications précédentes, **caractérisé en ce que** le corps de soupape (17) comprend au moins un élément de base (22) auquel les dispositifs en forme de secteurs sont articulés.

21. Ensemble de soupape selon l'une au moins des revendications précédentes, **caractérisé en ce que** les dispositifs en forme de secteurs (24) sont reliés à l'aide de charnières, de préférence des charnières en forme de films, ou à l'aide de sections de pliage (23) à l'élément de base (22) du corps de soupape (17), et le corps de soupape (17) est de préférence réalisé d'une seule pièce.

22. Ensemble de soupape selon l'une au moins des revendications précédentes, **caractérisé en ce que** le corps de soupape (17) présente par endroits des matières différentes et est de préférence apte à être fabriqué à l'aide d'un procédé de formage à plusieurs composants.

23. Ensemble de soupape selon l'une au moins des revendications précédentes, **caractérisé en ce que** le corps de soupape (17), dans la zone d'articulation et de pliage des dispositifs en forme de secteurs (24), présente une matière à élasticité plus élevée et/ou à module d'élasticité plus faible par rapport aux zones du corps de soupape (17) voisines.

24. Ensemble de soupape selon l'une au moins des revendications précédentes, **caractérisé en ce que** le corps de soupape (17) présente une matière d'étanchéité dans la zone des arêtes d'étanchéité (25) des dispositifs en forme de secteurs (24).

25. Ensemble de soupape selon l'une au moins des revendications précédentes, **caractérisé en ce que** le corps de soupape (17) présente une matière d'étanchéité dans la zone du siège de soupape des dispositifs en forme de secteurs (24).

26. Ensemble de soupape selon l'une au moins des revendications précédentes, **caractérisé en ce que** les dispositifs en forme de secteurs (24) sont contraints en position ouverte.

27. Ensemble de soupape selon l'une au moins des revendications précédentes, **caractérisé en ce que** les sections de pliage (23) ont de préférence une forme à trois dimensions, l'élasticité de la matière pouvant être utilisée pour contraindre les dispositifs en forme de secteurs (24).

28. Ensemble de soupape selon la revendication 9, **caractérisé en ce que** le dispositif d'actionnement par traction et/ou par pression (10) présente des caractéristiques élastiques et est prévu pour contraindre le corps de soupape (17) dans le sens de fermeture de celui-ci avec une force de rappel et pour faire passer ledit corps de soupape (17) de la position ouverte à la position fermée lorsque la section d'extrémité du dispositif de conduite (2) ou du second dispositif de raccordement s'éloigne de la zone de raccordement (4) du boîtier de soupape (1).

29. Ensemble de soupape selon l'une au moins des revendications précédentes, **caractérisé en ce qu'**il comprend un dispositif de rappel (14) qui contraint le corps de soupape (17) dans le sens de fermeture (C) de celui-ci avec une force de rappel et qui est prévu pour faire passer ledit corps de soupape (17) de la position ouverte à la position fermée.

30. Ensemble de soupape selon l'une au moins des revendications précédentes, **caractérisé en ce que** le dispositif de rappel présente un ressort hélicoïdal (14).

31. Ensemble de soupape selon l'une au moins des revendications précédentes, **caractérisé en ce que** le dispositif de rappel (14) est constitué par un ressort de traction.

32. Ensemble de soupape selon la revendication 30, **caractérisé en ce que** le ressort hélicoïdal (14) est disposé à l'intérieur du conduit d'écoulement (8) du boîtier (1), en entourant des parties au moins du dispositif d'actionnement par traction et/ou par pression (10), entre la paroi intérieure du boîtier (1) et le dispositif d'actionnement par traction et/ou par pression (10).

33. Ensemble de soupape selon l'une au moins des revendications précédentes, **caractérisé en ce que** le ressort hélicoïdal est constitué par un ressort de compression (14) et est apte à être monté entre un élément de butée (13) relié mécaniquement au dispositif d'actionnement par traction et/ou par pression (10) et un support (16) situé côté boîtier, espacé axialement de l'élément de butée (13) et placé plus près du corps de soupape (17) que l'élément de butée (13), dans le sens d'écoulement, le corps de soupape (17) étant apte à passer dans la position fermée par traction, par l'intermédiaire du dispositif d'actionnement par traction et/ou par pression (10), et le ressort de compression (14) étant apte à être contraint par une pression quand la soupape passe dans la position fermée.

34. Ensemble de soupape selon la revendication 33, **caractérisé en ce que** le support (16), situé côté boîtier, du ressort de compression (14), est voisin du siège de soupape (15).

35. Ensemble de soupape selon l'une au moins des revendications précédentes, **caractérisé en ce que** le corps de soupape (17) est entouré dans le sens radial par un manchon de protection (19).

36. Ensemble de soupape selon l'une au moins des revendications précédentes, **caractérisé en ce que** le manchon de protection (19) entoure globalement entièrement le corps de soupape (17) dans le sens radial, au moins dans la position fermée dudit corps de soupape (17).

37. Ensemble de soupape selon la revendication 35, **caractérisé en ce que** le manchon de protection (19) est apte à être relié de manière imperdable au boîtier de soupape (1) et est de préférence réalisé d'une seule pièce avec celui-ci.
